# EUROPEAN PATENT APPLICATION

(11) **EP 4 653 225 A1**
(43) Date of publication of application: **26.11.2025**
(21) Application number: 23918701.6
(22) Date of filing: 26.01.2023
(51) Int. Cl.: B60K 35/00

(54) **AUGMENTED REALITY-BASED DISPLAY DEVICE FOR VEHICLE AND CONTROL METHOD THEREOF**

(71) Applicant: LG Electronics Inc., Yeongdeungpo-gu Seoul 07336 (KR)
(72) Inventor: HONG, Jinhyuk, Seoul 06772 (KR); CHOI, Byeongjun, Seoul 06772 (KR); LEE, Hansung, Seoul 06772 (KR); KIM, Ilwan, Seoul 06772 (KR); PARK, Jongtae, Seoul 06772 (KR); KIM, Hyeonggyu, Seoul 06772 (KR)
(74) Representative: Vossius & Partner Patentanwälte Rechtsanwälte mbB
(86) International application number: PCT/KR2023/001206
(87) International publication number: WO 2024/158065

(57) **Abstract**

The present invention is characterized by comprising: an interface unit for receiving, from at least one sensor provided in a vehicle, a sensed image of an environment surrounding the vehicle; a categorization information database comprising categorization information for categorizing objects included in the sensed image into different categories; an object identifying unit for categorizing and identifying each object included in the sensed image into one of the categories in the categorization information database on the basis of the categorization information; a renderer for rendering an image to be displayed on a display unit provided in the vehicle; and a processor for detecting an object corresponding to a category selected by a user among the objects for which the categories have been identified, controlling the renderer to render an output image in which the detected object is replaced with a graphical object corresponding to the detected object, and controlling the interface unit so that the rendered output image is outputted on the display unit through the interface unit.

## Description

### Technical Field

The present disclosure relates to a display device that displays an image of a surrounding environment of a vehicle.

### Background Art

Recently, augmented reality (AR) technology has emerged that outputs a graphic object through a vehicle's windshield or head-up display (HUD), or outputs a virtual object in a real world using a graphic object that overlaps an image captured by a camera. A current vehicle may provide a driver with additional information items on an environment around the vehicle, the vehicle's state, and the vehicle's driving path through the augmented reality technology so as to allow the driver to intuitively recognize the vehicle and its driving environment. Therefore, driving efficiency and convenience may be further improved.

Research is being actively conducted to provide user-customized information items based on an actual real world by utilizing the augmented reality technology. Furthermore, as part of the research, AR information filtering technology has been developed to allow only augmented reality information of the user's interest to be displayed by having the user set a point of interest (POI) category in advance and only displaying augmented reality information according to POI information provided from a cloud server when there is a POI corresponding to the preset category around the vehicle.

However, the AR information filtering technology only limits the display of augmented reality information related to each object in the real world around the user, and objects in the real world are displayed as they are. That is, there is a problem that only user-customized information can be provided for the displayed augmented reality information, and objects in the real world that the user is not interested in or does not want to see are displayed as they are.

Besides, there is a need to apply the augmented reality technology to objects in the real world, such as continuously providing information on a specific POI desired by the user regardless of objects in the real world around the user.

### Disclosure of Invention

### Technical Problem

The present disclosure aims to solve the aforementioned problems and other problems, and an aspect of the present disclosure is to provide a display device capable of preventing objects that a user is not interested in or does not want to see in real world objects as well as augmented reality information from being displayed or displaying them in a simplified manner by utilizing augmented reality technology, and a control method thereof.

In addition, the present disclosure aims to provide a display device that can display information on the location and direction of a specific POI that is necessary or desired by the user, regardless of objects in the real world, by utilizing augmented reality technology, or may display the location and direction of the specific POI that relatively changes depending on the location of a moving vehicle, regardless of objects in the real world, and a control method thereof.

### Solution to Problem

In order to achieve the foregoing or other objectives, according to an aspect of the present disclosure, a display device according to an embodiment of the present disclosure may include an interface unit that receives, from at least one sensor provided in a vehicle, a sensing image sensing an environment surrounding the vehicle, a memory including a classification information database including classification information items for classifying respective objects included in the sensing image into different preset categories, an object identification unit that classifies and identifies respective objects included in the sensing image into one of the categories on the classification information database based on the classification information, a renderer that renders an image to be displayed on a display provided in the vehicle, and a processor that detects objects corresponding to at least one category selected by a user from among objects identified by the category, controls the renderer to render an output image in which the detected objects are replaced with graphic objects corresponding to the detected objects, and controls the interface unit so as to allow the rendered output image to be output on the display through the interface.

In one embodiment, the display device may further include a communication unit communicating with a cloud server that provides POI information including an augmented reality object corresponding to a position of interest (POI) around the vehicle, wherein the processor requests POI information on a POI around the vehicle, including information on a current location of the vehicle and at least one category selected by the user from the cloud server, extracts, when at least one POI information corresponding to the at least one category among POIs around the vehicle is received from the cloud server in response to the request, an augmented reality object from the received POI information, and controls the renderer to render an output image in which the detected objects are replaced with the extracted augmented reality objects.

In one embodiment, the cloud server may include POI information items classified according to the plurality of preset categories, and the classification information database may include classification information items for classifying respective objects included in the sensing image according to the plurality of preset categories into which the POI information items are classified by the cloud server.

In one embodiment, the graphic object, which is a polygon object, may be a graphic object representing a shape of each of the detected objects.

In one embodiment, the processor may delete objects detected according to the selected at least one category from the sensing image, and control the renderer to render an output image in which the detected objects are deleted from the sensing image.

In one embodiment, the processor may detect an area where the detected objects are displayed from the sensing image and initializes color information of the detected area to delete the detected objects from the sensing image, and the color of the initialized area may vary according to a user's selection.

In one embodiment, the processor may detect, when the detected objects are deleted from the sensing image, at least one of a color of a surrounding area of the deleted objects and a color pattern of the surrounding area, generate a filled image corresponding to an area in the sensing image from which the detected objects have been deleted based on at least one of the color and the color pattern, and control the renderer to render an output image in which the filled image is displayed within an area of the sensing image corresponding to the deleted objects.

In one embodiment, the processor may further detect, when a preset condition is satisfied, objects corresponding to a specific category matching the satisfied condition from the sensing image.

In one embodiment, the preset condition may be a condition for at least one of an illuminance, a weather, or a time of the vehicle.

In one embodiment, the preset condition may be a condition for biometric information detected from at least one of passengers of the vehicle detected by a sensor unit of the vehicle.

In one embodiment, the processor may detect, based on location information of a preset specific POI and location information of a vehicle, at least one object in the sensing image located in a direction from the vehicle toward the specific POI, delete the detected at least one object from the sensing image, and control the renderer to render an output image that displays a graphic object corresponding to the specific POI in an area in the sensing image corresponding to the deleted at least one object.

In one embodiment, the graphic object may be an augmented reality object corresponding to the specific POI, and the processor may receive location information of the specific POI and an augmented reality object corresponding to the specific POI from the cloud server.

In one embodiment, the processor may calculate a distance between the specific POI and the vehicle based on the location information of the specific POI and the location information of the vehicle, and determine a size of the graphic object according to the calculated distance.

In one embodiment, the processor may detect, from among objects in the sensing image located in a direction toward the specific POI, objects corresponding to a category for which deletion is restricted, and delete only the remaining objects excluding the objects corresponding to the category for which deletion is restricted.

In order to achieve the foregoing or other objectives, according to an aspect of the present disclosure, a method of controlling a camera and at least one sensor provided in a vehicle and a display device connected to a display through an interface unit according to an embodiment of the present disclosure may include receiving a sensing image sensed through the camera, classifying and identifying categories corresponding to respective objects included in the sensing image based on classification information items for classifying into different preset categories, detecting objects corresponding to at least one specific category selected by a user from among the objects identified by the category, generating an output image by replacing the detected objects with graphic objects respectively corresponding to the detected objects, and rendering the output image so as to allow the generated output image to be output on the display.

In one embodiment, the generating of the output image may include initializing an area in the sensing image corresponding to each of the detected objects to generate an output image from which the detected objects are deleted from the sensing image.

In one embodiment, the generating of the output image may include initializing an area in the sensing image corresponding to each of the detected objects, detecting at least one of a color of a surrounding area of the deleted objects and a color pattern of the surrounding area, generating a filled image corresponding to an area in the sensing image from which the detected objects are deleted based on at least one of the color and color pattern, and generating an output image in which the filled image is displayed in an area of the sensing image corresponding to the deleted objects.

In one embodiment, the generating of the output image may include transmitting information of the specific category and location information of the vehicle to a cloud server, and requesting POI information including an augmented reality object corresponding to a position of interest (POI) of a category corresponding to the specific category around the location of the vehicle, receiving POI information from the cloud server in response to the request, deleting, from among the objects included in the sensing image, an object corresponding to the specific category from the sensing image, and generating an output image in which an augmented reality object corresponding to each object deleted from the sensing image is displayed in an area on the sensing image corresponding to the deleted object.

In one embodiment, the detecting of objects corresponding to the specific category may include detecting a location of a specific POI selected by a user based on a location of the vehicle, and detecting, from the sensing image, at least one object displayed in a direction from the location of the vehicle toward the location of the specific POI, wherein a graphic object corresponding to the detected object is an augmented reality object corresponding to the specific POI.

### Advantageous Effects of Invention

The effects of a display device according to the present disclosure and a control method thereof will be described as follows.

According to at least one of embodiments of the present disclosure, the present disclosure may classify and identify respective objects included in an image sensed by a camera of a vehicle according to preset categories, and approximate objects corresponding to at least one category according to a preset condition or a user's setting by deleting or replacing them with simplified objects on a display. Accordingly, there is an effect of providing the user with an image around the vehicle that does not include specific types of objects that the user is not interested in or does not want to see.

In addition, according to at least one of embodiments of the present disclosure, the present disclosure may delete an object between a vehicle and a user's current status or a specific POI set by the user from an image sensed by a camera, and display information on the specific POI in an area of the image from which the object has been deleted, thereby having an effect capable of providing information on the specific POI without being obscured by objects in a real world.

### Brief Description of Drawings

FIG. 1 is an exemplary diagram showing a configuration of a display device according to an embodiment of the present disclosure.
FIG. 2 is a conceptual diagram showing a structure in which a display device according to an embodiment of the present disclosure provides augmented reality information in conjunction with a cloud server.
FIG. 3 is a flowchart showing an operation process of outputting, by a display device according to an embodiment of the present disclosure, an image including at least one approximated object based on a category according to a condition or a user's selection.
FIG. 4 is an exemplary diagram showing an example of receiving, by a display device according to an embodiment of the present disclosure, a category selection from a user.
FIG. 5 shows a flow of an approximation operation process of FIG. 3 of deleting, by a display device according to an embodiment of the present disclosure, objects corresponding to a specific category.
FIG. 6 is an exemplary diagram showing a process of generating an image in which a real object corresponding to a specific category is deleted according to the operation process of FIG. 5.
FIG. 7 shows a flow of an approximation operation process of FIG. 3 of replacing, by a display device according to an embodiment of the present disclosure, objects corresponding to a specific category with simplified objects.
FIG. 8 is an exemplary diagram showing a process of generating an image in which a real object corresponding to a specific category is replaced with a simplified object according to the operation process of FIG. 7.
FIG. 9 is an exemplary diagram showing an example of approximating, by a display device according to an embodiment of the present disclosure, objects corresponding to a specific category based on preset illuminance.
FIGS. 10A and 10B are flowcharts showing in more detail steps S304 and S306 of FIG. 3 of displaying, by a display device according to an embodiment of the present disclosure, a real object corresponding to a specific category by replacing it with AR information corresponding to the specific category.
FIG. 11 is an exemplary diagram showing an example in which a real object corresponding to a specific category is replaced with AR information according to the operation process of FIGS. 10A and 10B.
FIG. 12 is a flowchart showing an operation process of detecting, by a display device according to an embodiment of the present disclosure, an object corresponding to POI information corresponding to a specific category based on a user's biometric information.
FIGS. 13A and 13B are flowcharts showing an operation process of detecting, by a display device according to an embodiment of the present disclosure, at least one object from an image sensed according to a vehicle and a location of a specific POI, and displaying an AR object of the specific POI instead of the detected object.
FIG. 14 is an exemplary diagram showing an example of an image being generated in which some of real objects included in the sensed image are replaced with AR objects of a specific POI according to the operation process of FIGS. 13A and 13B.
FIG. 15 is an exemplary diagram showing an example in which an AR object corresponding to a specific object selected by a user is displayed on an image in which a real object is displayed, in a display device according to an embodiment of the present disclosure.

### Mode for the Invention

It should be noted that the technical terms used herein are merely used to describe a specific embodiment, but are not intended to limit the present disclosure. Furthermore, a singular expression used herein includes a plural expression unless it is clearly construed in a different way in the context. A suffix "module" or "part" used for elements disclosed in the following description is merely intended for easy description of the specification, and the suffix itself is not intended to have any special meaning or function.

As used herein, terms such as "comprise" or "include" should not be construed to necessarily include all elements or steps described herein, and should be construed not to include some elements or some steps thereof, or should be construed to further include additional elements or steps.

In addition, in describing technologies disclosed herein, when it is determined that a detailed description of known technologies related thereto may unnecessarily obscure the subject matter disclosed herein, the detailed description will be omitted.

Furthermore, the accompanying drawings are provided only for a better understanding of the embodiments disclosed herein and are not intended to limit technical concepts disclosed herein, and therefore, it should be understood that the accompanying drawings include all modifications, equivalents and substitutes within the concept and technical scope of the present disclosure. In addition, not only individual embodiments described below but also a combination of the embodiments may, of course, fall within the concept and technical scope of the present disclosure, as modifications, equivalents or substitutes included in the concept and technical scope of the present disclosure.

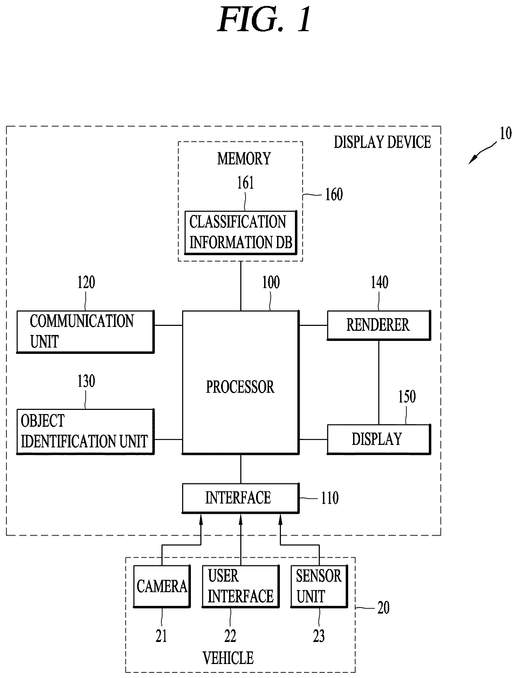

First, FIG. 1 is an exemplary diagram showing a configuration of a display device 10 according to an embodiment of the present disclosure.

Referring to FIG. 1, the display device 10 according to an embodiment of the present disclosure may be configured to include a processor 100, an interface 110 connected to the processor 100, a communication unit 120, an object identification unit 130, a renderer 140, a display 150, and a memory 160. The elements shown above in FIG. 1 are not essential for implementing the display device 10, and thus the display device 10 described herein may have more or fewer element than those listed above.

First, examining the interface 110, the interface 110 may be connected to an interface unit (not shown, hereinafter referred to as a vehicle interface unit) of a vehicle 20, and may receive various information items provided from the vehicle 20 through the vehicle interface unit. Here, the vehicle interface unit may serve as a passage between various types of external devices connected to the vehicle 20 or each component of the vehicle 20. For example, the vehicle interface unit may be provided with various ports connected to the interface 110, and may be connected to the interface 110 through the ports. Furthermore, data may be exchanged with the interface 110.

The interface 110 may be connected to each component of the vehicle 20 through the vehicle interface unit. As an example, the interface 110 may be connected to a camera 21 of the vehicle 20 to receive an image sensed by the camera 21. Hereinafter, an image sensed by the camera 21 will be referred to as a 'sensing image'.

In addition, the interface 110 may be connected to a user input unit 22 provided in the vehicle 20 to receive a user input applied through the user input unit 22. Here, the user input unit 22 may include a voice input unit that can receive a user's voice input, a gesture detection unit that can detect a user's gesture, a touch input unit disposed to include a touch sensor, and a mechanical input unit.

Additionally, the interface 110 may receive a detection value detected by at least one sensor provided in the vehicle 20 through the vehicle interface unit. Here, the at least one sensor may be a sensor for detecting a location of the vehicle 20 (e.g., a location sensor such as GPS), and at least one state sensor for detecting a state of the vehicle 20 (e.g., a speed sensor, a tilt sensor, etc.). In addition, the interface 110 may include a path guidance device (e.g., navigation) for detecting a driving path of the vehicle 20 and a biometric information detection sensor for detecting biometric information of passengers in a cabin of the vehicle 20, such as a driver and fellow passengers.

Furthermore, the communication unit 120 may perform wireless communication between the display device 10 and a preset server. To this end, the communication unit 120 may include at least one of a transmitting antenna, a receiving antenna, and a radio frequency (RF) circuit and RF element capable of implementing various communication protocols.

The communication unit 120 may be provided with at least one of a communication module for short-range communication and a communication module for V2X communication. As an example, the communication module for short-range communication (short-range communication module) may be disposed to support short-range communication by using at least one of Bluetooth^{™}, Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (Wireless USB) technologies, and may perform a communication connection with at least one external device connected to the vehicle 20 or at least one component provided in the vehicle 20 through the short-range communication module.

Meanwhile, the communication module for V2X communication (V2X communication module) may perform wireless communication with a server (V2I: Vehicle to Infra), another vehicle (V2V: Vehicle to Vehicle), or a pedestrian (V2P: Vehicle to Pedestrian). To this end, the V2X communication module may include at least one RF circuit capable of implementing communication with infrastructure (V2I), vehicle-to-vehicle (V2V), and pedestrian-to-pedestrian (V2P) protocols.

Here, the communication unit 120 may be a communication unit provided in the vehicle 20 rather than the display device 10. In this case, the display device 10 may be connected to the communication unit 120 of the vehicle 20 through the interface 110, and the processor 100 may also control the communication unit 120 by way of the interface 110.

Furthermore, the object identification unit 130 may identify each object in an image (hereinafter referred to as a sensing image) sensed through the camera 21 under the control of the processor 100 and classify the identified object according to a preset category. The object identification unit 130 may identify each object in a sensing image based on information items (hereinafter referred to as classification information items) for identifying and classifying each object by preset category. Here, the classification information items may be databased by related category and included in the memory 160 of the display device 10 according to an embodiment of the present disclosure.

Meanwhile, a renderer may render a sensing image configured to include at least one approximated object on the display 150 under the control of the processor 100. Furthermore, the display 150 may output an image rendered by the renderer 140. The renderer 140 may render an image in which at least one of objects included in the sensing image, that is, objects in a real world displayed in an actual image (hereinafter referred to as real objects) is deleted on the display 150 under the control of the processor 100, or may render an image including a simplified graphic object or an augmented reality object that replaces at least one of the real objects. Accordingly, the display 150 may output an image in which some of the real objects included in the sensing image are deleted, or an object simplified into a polygon shape or an augmented reality object is included instead of some of the real objects.

Here, the display 150 may be a display such as a touch screen provided in the vehicle 20. In this case, the display 150 may be connected through the interface 110, and the processor 100 may control the display 150 through the interface unit 110 to output an image rendered by the renderer 140.

Meanwhile, the memory 160 may store data that supports various functions of the display device 10. The memory 160 may store a plurality of application programs (or applications) that can be executed by the processor 100, data for the operation of the display device 10, and commands therefor.

As an example, the memory 160 may be disposed to include a database of the classification information items (hereinafter referred to as a classification information database 161). The classification information database 161 may include classification information items for classifying respective objects included in the sensing image into respective categories. In this case, the classification information items may be feature information for classifying image objects into specific categories.

Additionally, the classification information may be downloaded from an external server that is preset to provide the classification information. In this case, the processor 100 may update the classification information database 161 according to classification information corresponding to at least some categories downloaded from the external server.

The processor 100 controls each connected element, and typically controls an overall operation of the display device 10. First, the processor 100 may receive an image sensed from the camera 21 of the vehicle 20 through the interface 110. Furthermore, the received sensing image may be input into the object identification unit 130 to control the object identification unit 130 so as to allow the object identification unit 130 to identify and classify each object included in the sensing image according to a category defined in the classification information database 161.

Furthermore, when respective objects in the sensing image are identified and classified by the object identification unit 130 according to a category defined in the classification information database 161, the processor 100 may determine whether a preset condition has been satisfied or whether there is a specific category selected by a user. Furthermore, when, as a result of the determination, the condition is satisfied or there is a specific category selected by the user, it may be possible to detect whether categories corresponding to each object in the sensing image include the satisfied condition or a specific category selected by the user. Furthermore, when the categories corresponding to each object in the sensing image include the satisfied condition or a specific category selected by the user, objects in the sensing image corresponding to the specific category or the remaining objects excluding the objects corresponding to the specific category may be approximated.

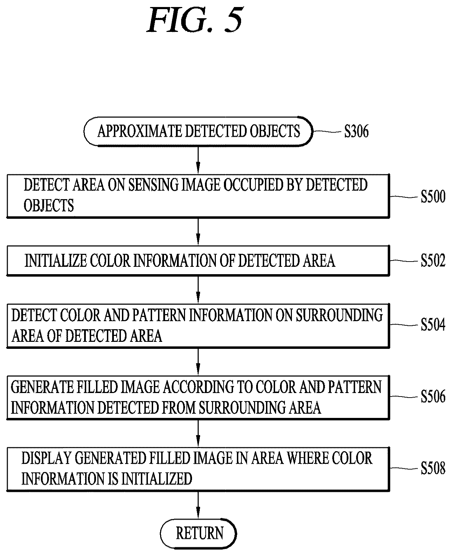

Here, the approximation may refer to deleting at least one object from the sensing image. Alternatively, the approximation may refer to replacing at least one object included in the sensing image with a simplified object, such as a polygon object or with an augmented reality object. Hereinafter, a more detailed operation process of the processor 100 that approximates objects in the sensing image will be examined in detail with reference to FIGS. 5 to 10B.

When approximation is performed on at least one object included in the sensing image, the processor 100 may configure an image to be finally output by placing the approximated object and real objects that have not been approximated. Furthermore, the renderer 140 and the display 150 may be controlled to render the configured image to be finally output on the display 150. Accordingly, an image around the vehicle, including real objects and objects that have been deleted or simplified or replaced with augmented reality objects, may be output through the display 150.

Meanwhile, in order to replace a real object in a sensing image with an augmented reality object, the display device 10 according to an embodiment of the present disclosure may be linked with a cloud server 30 that provides an augmented reality service.

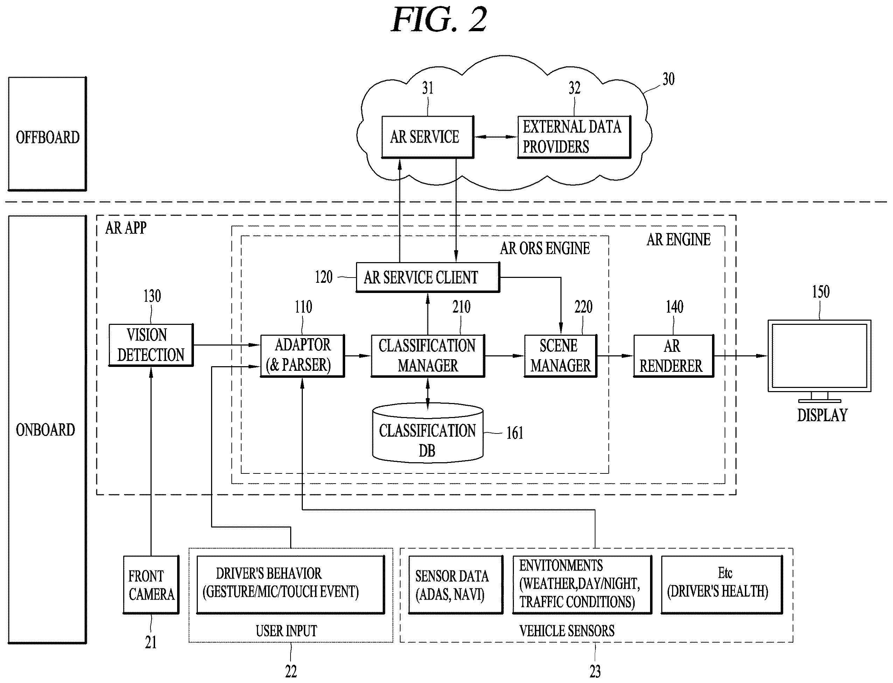

FIG. 2 is a conceptual diagram showing a structure in which the display device 10 according to an embodiment of the present disclosure provides augmented reality information in conjunction with a cloud server as described above.

Referring to FIG. 2, the display device (onboard) 10 according to an embodiment of the present disclosure may be provided with an AR engine that renders and outputs an AR image. Furthermore, the AR engine may include an adapter that receives an image sensed by the camera 21, a user's gesture information or touch event information sensed through the user input unit 22 of the vehicle 20, and sensing information sensed by advanced driver assistance systems (ADAS), navigations, environmental sensors, biometric information detection sensors, and the like. Here, the adapter may have a configuration corresponding to the interface 110 among the components of FIG. 1.

Here, an image sensed by the camera 21 may be received through the interface 110 as described in FIG. 1 to perform object identification by the object identification unit 130 under the control of the processor 100. Furthermore, a result of the object identification in the object identification unit 130 may be input to the processor 100. Alternatively, as shown in FIG. 2, an image sensed by the camera 21 may be directly input to the object identification unit 130 to perform object identification, and a result of the object identification in the object identification unit 130 may be received by the AR engine through the interface 110, that is, the adapter. Here, the object identification result may be a result of classifying each object included in the sensing image into one of the categories defined through the classification information database 161 based on the classification information items of the classification information database 161.

Furthermore, a classification manager 210 may receive the user's input detected by the user input unit 22 of the vehicle 20 through the adapter. Furthermore, based on the received user's input, at least one category to be approximated from among the categories of the classification information database 161 may be selected. Furthermore, based on a result of the object identification received through the adapter, an object corresponding to a category selected by the user from among the categories corresponding to respective objects included in the sensing image may be detected. Furthermore, the detected object may be approximated by deleting it or simplifying it into a graphic object such as a polygon.

Alternatively, the classification manager 210 may perform the approximation using an augmented reality graphic object (hereinafter referred to as an augmented reality object) corresponding to the detected object. To this end, the AR engine may be provided with an AR service client that provides a wireless connection interface with the cloud server 30 that provides an augmented reality service. Here, the AR service client may have a configuration corresponding to the communication unit 120 that supports wireless communication connection to the cloud server 30.

Here, the cloud server 30 may include an AR service unit 31 that provides POI information including an augmented reality object in response to a request from the AR service client, and data providers (external data providers) 32 that include POI information and geographic information to be provided through the AR service unit 31.

In this case, the AR service unit 31 may receive a request for POI information around the vehicle 20 including location information of the vehicle 20 from the AR service client. Then, the AR service unit 31 may request POI information in an area corresponding to the received location information from the data providers 32. Furthermore, when POI information including an augmented reality object is received from the data providers 32 in response to a request, the AR service unit 31 may provide the received POI information to the AR service client. Then, through the AR service client, an augmented reality object corresponding to an object on the sensing image corresponding to a category selected by the user may be transmitted to the classification manager 210.

Meanwhile, when the classification manager 210 determines to delete an object on a sensing image corresponding to a category selected by the user or to replace it with a simplified object such as a polygon or an augmented reality object (approximation), the scene manager 220 may form an image in which the object on the sensing image corresponding to the category selected by the user is deleted or replaced with the simplified object or augmented reality object. That is, the scene manager 220 may determine an area on the sensing image where each object is to be placed, and initialize (delete) an area occupied by the detected object, that is, the object on the sensing image corresponding to the category selected by the user among the determined areas, or place a simplified object or an augmented reality object received from the cloud server 30 in the area occupied by the detected object. Here, the classification manager 210 and scene manager 220 may have a configuration corresponding to the processor 100 of FIG. 1.

Furthermore, the AR renderer may receive scene management information of objects placed in each area on the sensing image from the scene manager 220. Furthermore, an image according to the received scene management information may be rendered on the display 150. Accordingly, an image in which at least one object on a sensing image corresponding to a category selected by a user is deleted or replaced with a simplified object or an augmented reality object may be output through the display 150. Here, the AR renderer may have a configuration corresponding to the renderer 140 of FIG. 1.

Meanwhile, the POI information items provided from the cloud server 30 may be information classified according to a specified category. Furthermore, the categories in which the POI information items are classified in the cloud server 30 may be the same categories as those of the classification information database 161 of the display device 10 according to an embodiment of the present disclosure. That is, the classification information database 161 may include classification information items classified according to categories corresponding to the categories into which POI information items are classified in the cloud server 30. Accordingly, the display device 10 may request only POI information corresponding to a specific category, for example, a category corresponding to satisfaction of a preset condition or a user's selection, among POI information items around a current location of the vehicle 20 from the cloud server 30, and may receive only POI information corresponding to the specific category in response to the request.

Meanwhile, the foregoing description has described in detail a configuration including the display device 10 and an AR engine connected to the cloud server 30 according to an embodiment of the present disclosure. The following description will explain an operation process of outputting, by the display device 10, an approximated image of at least one object corresponding to a category selected by a user on the display 150. In addition, for convenience of explanation, hereinafter, it will be described based on the configuration of the foregoing display device 10 as described in FIG. 1.

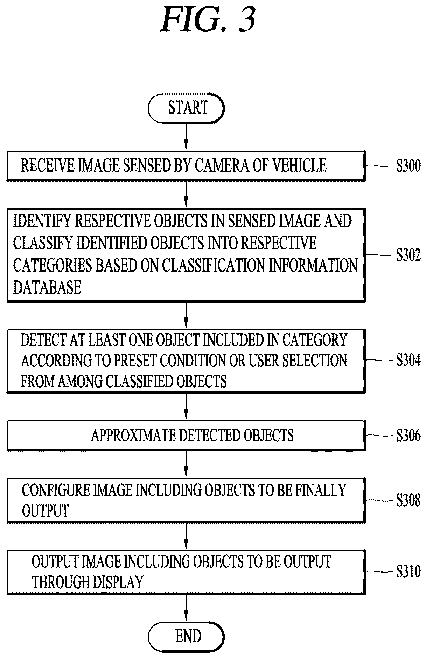

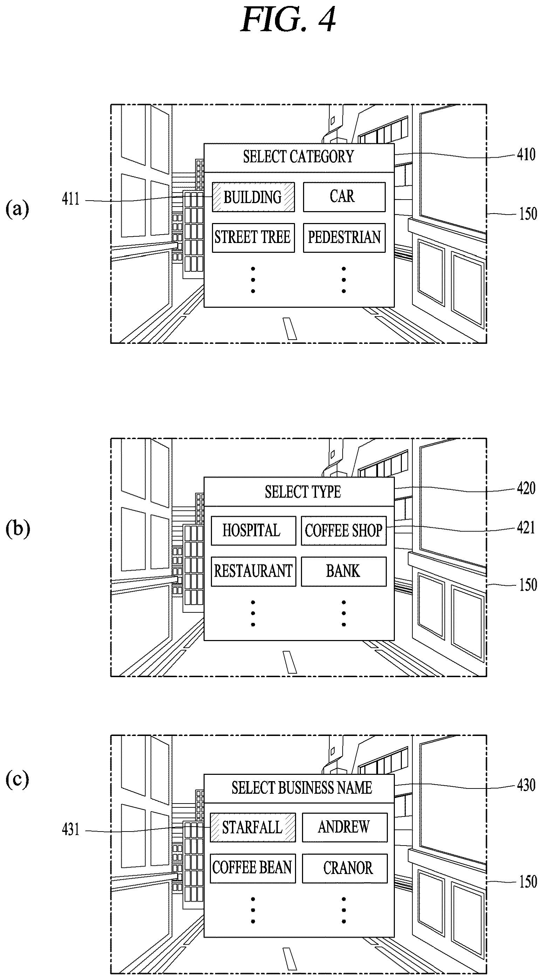

Meanwhile, FIG. 3 is a flowchart showing an operation process of outputting, by the display device 10 according to an embodiment of the present disclosure, an image including at least one approximated object based on a category according to a condition or a user's selection. Meanwhile, FIG. 4 is an exemplary diagram showing an example of receiving, by a display device according to an embodiment of the present disclosure, a category setting from a user.

First, referring to FIG. 3, the display device 10 according to an embodiment of the present disclosure may receive an image (hereinafter, a sensing image) sensed by the camera 21 of the vehicle 20 (S300). Here, the camera 21 may be a front camera that senses a front image of the vehicle 20. Alternatively, the camera 21 may be a rear or side camera that senses the rear or side of the vehicle 20.

Then, the processor 100 of the display device 10 may control the object identification unit 130 to identify categories corresponding to respective objects in the sensing image (S302). Here, the object identification unit 130 may use the classification information database 161 including classification information items corresponding to each of the predefined categories to identify categories corresponding to the respective objects.

As an example, in the step S302, the object identification unit 130 may divide respective objects included in the sensing image. Furthermore, under the control of the processor 100, features for the respective divided objects in the sensing image may be detected. Furthermore, based on the classification information database 161, classification information items corresponding to features detected from each object may be detected. Furthermore, based on the categories corresponding to the detected classification information items, the categories corresponding to each object may be identified. Accordingly, through the step S302, respective objects included in the sensing image may be divided, and categories on the classification information database 161 corresponding to the respective divided object may be identified.

Then, the object identification unit 130 may provide information on the identified categories corresponding to respective objects in the sensing image to the processor 100 as an object identification result. Furthermore, based on the received object identification result, the processor 100 may detect an object corresponding to a category according to whether a preset condition is satisfied or a category according to a user's selection from among the objects in the sensing image (S304).

As an example, the processor 100 may determine whether a preset condition corresponding to at least one category is satisfied in the step S304. For example, the preset condition may be an illumination, a time, or a weather. Furthermore, when the illuminance, time, or weather (e.g., weather conditions such as rain or snow) detected by a sensor unit 23 of the vehicle 20 satisfies a preset condition, an object corresponding to at least one category corresponding to the condition among the objects in the sensing image may be detected.

Alternatively, the processor 100 may determine, in the step S304, whether there is a category pre-selected by the user for approximation. To this end, the processor 100 may control the display 150 to display a menu screen that can select a category, and may determine at least one category based on the user's input applied through the menu screen as a category selected by the user for approximation. Here, the category may be a predefined category for classifying objects on the classification information database 161.

FIG. 4 is an exemplary diagram showing an example in which the display device 10 according to an embodiment of the present disclosure receives at least one category for approximation from a user through the menu screen.

Referring to (a) of FIG. 4, the processor 100 of the display device 10 may display a menu screen 410 that allows selection of at least one category item according to the user's selection on the display 150. Here, the category items may be items corresponding to respective categories predefined in the classification information database 161.

In this state, the user may apply an input for selecting an item 411 corresponding to the 'building' category, as shown in (a) of FIG. 4. Then, the processor 100 may display a specific category item selected according to the user's input to be divided from other category items that are not selected. Furthermore, as shown above in (a) of FIG. 4, when the user selects the 'building' category and then ends the category selection, the processor 100 may detect all objects whose classified category is 'building' from among the objects included in the sensing image in the step S304.

Meanwhile, the processor 100 of the display device 10 according to an embodiment of the present disclosure may, of course, allow the user to select a more detailed category. As an example, as shown in (a) of FIG. 4, when the user selects the 'building' category, the processor 100 may further display a menu screen 420 including items corresponding to the subcategories of the currently selected 'building', as shown in (b) of FIG. 4, according to the user's selection.

In this case, the subcategories may be categories that are divided according to the main purpose of the building, for example, the services that can be provided. Accordingly, the subcategories may be categories from which specific services such as hospitals, restaurants, coffee shops, and banks can be selected, as shown in (b) of FIG. 4.

Furthermore, as shown above in (b) of FIG. 4, when the user selects the 'coffee shop' category from the menu screen 420 including subcategory items and then ends the category selection, the processor 100 may detect, in the step S304, not only objects included in the sensing image whose classified category is the 'building' category, but also all the objects classified into the 'coffee shop' category from among the objects divided into the 'building' category. That is, when the user further selects a subcategory corresponding to a specific category, the processor 100 may detect only objects corresponding to the subcategory from among the objects included in the sensing image.

Meanwhile, the display device 10 according to an embodiment of the present disclosure may, of course, also allow the user to select a more detailed category. For example, as shown above in (b) of FIG. 4, the processor 100 of the display device 10 may further provide a menu screen 430 that can select a secondary subcategory according to a classification criterion (hereinafter referred to as a secondary classification criterion) different from that of the subcategory according to the user's selection, while a subcategory ('coffee shop') (hereinafter referred to as a primary subcategory) of a specific category ('building') is selected. In this case, the secondary subcategory selection menu screen 430 may be a menu screen that can select a category corresponding to the primary subcategory (e.g., coffee shop) among the categories on the classification information database 161 according to the secondary classification criterion.

As an example, the secondary subcategory may be a business name of a specific store or business. In this case, the secondary subcategory selection menu 430 may be a menu screen including business names corresponding to the primary subcategory (coffee shop), as shown in (c) of FIG. 4.

In this case, as shown above in (c) of FIG. 4, the user may select one category ('Starfall'). Then, in the step S304, the processor 100 may detect only objects included in the sensing image, which are classified into the 'building' category, and which are classified into the 'coffee shop' category and whose business name is 'Starfall' from among the objects classified into the 'building' category. That is, when the user further selects at least one subcategory corresponding to a specific category, the processor 100 may detect only objects all corresponding to at least one subcategory from among the objects included in the sensing image.

Meanwhile, in FIG. 4, a primary subcategory and a secondary subcategory have been described as examples of subcategories that can be selected by the user, but this is only an example according to an embodiment of the present disclosure, and the present disclosure is not, of course, limited thereto. That is, as many subcategories as possible may be selected by the user. Furthermore, as more subcategories are selected, the number of objects detected on the sensing image by the processor 100 as objects corresponding to a category according to the user's selection may decrease.

In addition, the foregoing description has been described as an example in which a user selects category items defined through the classification information database 161 through a menu screen, and detects at least one object on a sensing image through the selected menu item, but on the contrary, a specific object or specific category may, of course, also be selected based on the user's input applied to the display 150.

For example, the user may touch an area on a touch screen where a specific object is displayed while a sensing image is displayed on the touch screen. Then, the processor 100 may detect one object displayed in the touched area as an object according to the user's selection. Alternatively, the processor 100 may detect a category on the classification information database 161 corresponding to one object displayed in the touched area, and determine the detected category as a category selected by the user for approximation. In this case, the processor 100 may further detect at least one subcategory corresponding to one object according to the touch input, and determine at least one category including the detected subcategory as a category selected by the user for approximation.

Meanwhile, in the step S304, if an object corresponding to at least one category according to satisfaction of a preset condition or at least one category according to a user's selection is detected from among objects included in the sensing image, the processor 100 may perform approximation on the detected objects (S306).

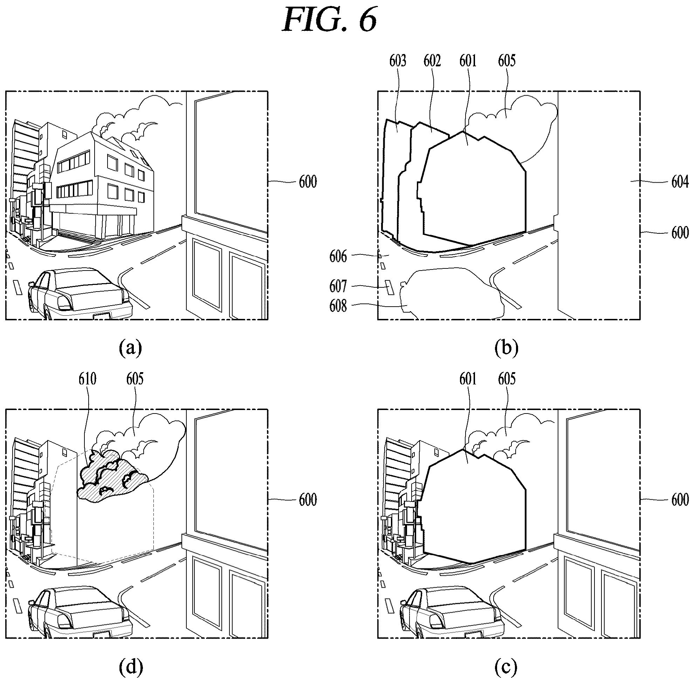

Here, the approximation may include deletion of at least one object detected in the step S304. In this case, the processor 100 may detect an area where objects detected in the step S304 are displayed from the sensing image and initialize pixel information of the detected area. Furthermore, color information and pattern information may be detected from an area around the area where pixel information is initialized, and a filled image may be generated according to the detected color and pattern. An operation process of the step S306, in which the object detected in the step S304 is deleted as described above, will be examined in more detail with reference to FIGS. 5 and 6 below.

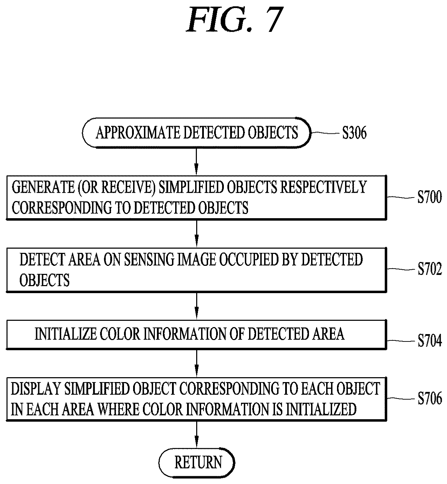

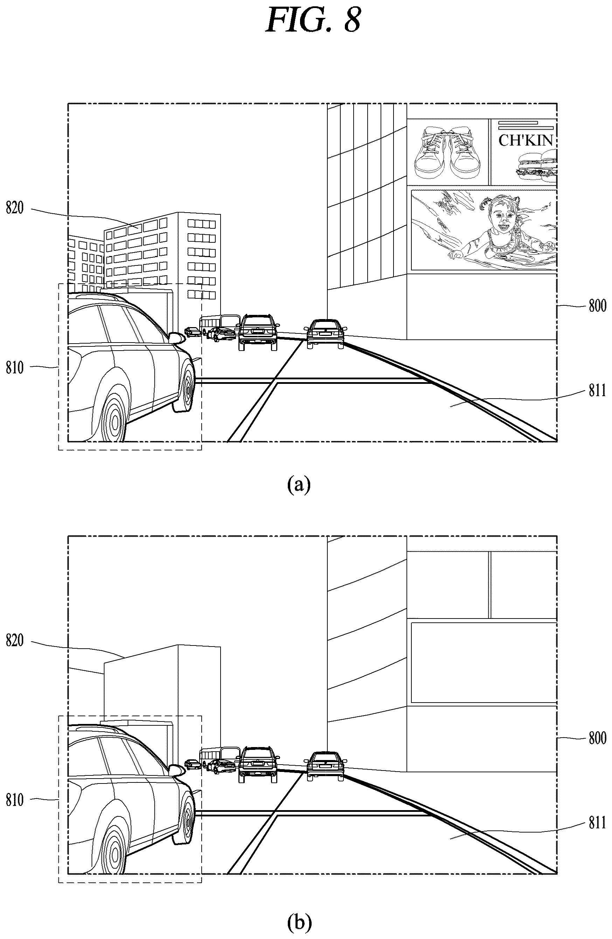

Meanwhile, the approximation may be a process of replacing at least one object detected in the step S304 with an object simplified into a graphic object such as a polygon. To this end, the processor 100 may generate a simplified object for the at least one detected object, and may detect an area on the sensing image where the objects detected in the step S304 are displayed. Furthermore, the generated simplified object may be placed on an area on the detected sensing image. The operation process of the step S306, in which the object detected in step S304 is replaced with a simplified object, will be examined in more detail with reference to FIGS. 7 and 8 below.

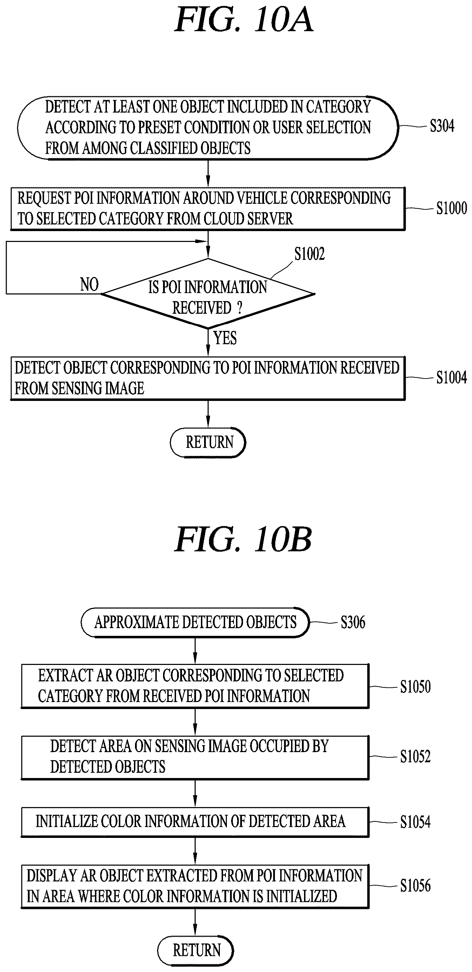

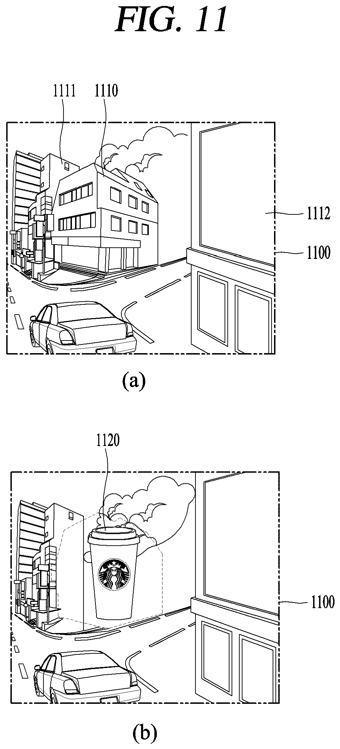

Additionally, the approximation may be a process of replacing at least one object detected in the step S304 with an augmented reality object provided from the cloud server 30. Hereinafter, the operation process of the step S304, in which an object in a sensing image corresponding to a category according to a user's selection is detected based on POI information received from the cloud server 30, and the step S306, in which at least one object detected in the step S304 is replaced with an augmented reality object included in the POI information, will be examined in more detail with reference to FIGS. 10A, 10B, and 11 below.

If at least one of objects in a capture image is deleted or replaced with a simplified object or an augmented reality object through the step S306, the processor 100 may determine locations of the objects that have been deleted or replaced with simplified objects or augmented reality objects in the image to configure an image to be finally output (S308). Furthermore, when the configuration of a final output image including the objects replaced with the deleted or simplified objects or augmented reality objects is completed, the renderer 140 may be controlled to render the final output image with the completed configuration on the display 150 (S310). Therefore, an image in which at least one of objects in a sensing image is deleted or replaced with a simplified object or an augmented reality object may be output through the display 150.

FIG. 5 shows in more detail an approximation operation process of step S306 of FIG. 3 of deleting, by the display device 10 according to an embodiment of the present disclosure, objects corresponding to a specific category. Furthermore, FIG. 6 is an exemplary diagram showing a process of generating an image in which a real object corresponding to a specific category is deleted according to the operation process of FIG. 5.

First, referring to FIG. 5, if an object corresponding to a specific category according to a user's selection or satisfaction of a preset condition is detected from among the objects in the sensing image in the step S304 of FIG. 3, the processor 100 may detect at least one area on the sensing image corresponding to each of the detected objects (S500). Furthermore, pixel information of the area detected in the step S500, for example, color information, may be initialized. Then, an image of an area detected in the step S500 may be deleted.

Referring to FIG. 6, (a) of FIG. 6 shows an example of a sensing image 600, and (b) of FIG. 6 shows an example in which the sensing image 600 is divided into a plurality of areas according to respective objects included in the sensing image 600.

As an example, the processor 100 may divide respective objects included in the sensing image 600 into different categories based on classification information items included in the classification information database 161. In this case, as shown in (a) of FIG. 6, when the sensing image 600 includes a plurality of buildings 601 to 604, a vehicle 608, a cloud 605, a road 606, and a lane 607, the processor 100 may respectively divide the plurality of buildings 601 to 604, the vehicle 608, the cloud 605, the road 606, and the lane 607 into different objects. Furthermore, respective areas in the sensing image 600 where the respective divided objects are displayed may be detected.

In this state, the specific building 601 may be an object corresponding to a category according to satisfaction of a preset condition or a user's selection. Then, the processor 100 may initialize an object corresponding to a category according to satisfaction of a preset condition or a user's selection, that is, pixel information on an area on the sensing image 600 where the specific building 601 is displayed. Accordingly, as shown in (c) of FIG. 6, an area corresponding to the specific building 601 in the sensing image 600 may be deleted.

Here, the pixel information may refer to color information set for each pixel. Furthermore, the initialization of pixel information may be to change the color information set for each pixel to color information according to a preset initial value. Therefore, if a color according to the initial value is white, when an area corresponding to the specific building 601 in the sensing image 600 is deleted, the area corresponding to the specific building 601 in the sensing image 600 may be displayed in white. Here, the color information according to the initial value may be a color selected by the user.

When a specific object corresponding to a category according to a user's selection or satisfaction of a preset condition is deleted, the processor 100 may detect a surrounding area of an area on the sensing image 600 where the pixel information is initialized due to the deletion. Furthermore, color information and information (pattern information) on a color pattern formed by the colors of the surrounding area may be detected from the detected surrounding area (S504). Furthermore, based on the detected color information and pattern information, a filled image corresponding to an area on the sensing image 600 where the pixel information is initialized may be generated (S506). Furthermore, the generated filled image may be placed in an area on the sensing image 600 where the pixel information is initialized (S508).

Accordingly, as shown in (c) of FIG. 6, when an area corresponding to the specific building 601 is deleted in the sensing image 600, the processor 100 may detect color information and color pattern information from an area around the deleted specific building 601. In this case, the sky around the specific building 601 including the surrounding building 602 and the cloud 605 adjacent to the specific building 601 may be detected as an area around the specific building 601. Then, the processor 100 may generate a filled image having a color and pattern similar to the detected surrounding area, that is, the sky around the specific building 601 including the surrounding building 602 and the cloud 605 adjacent thereto. Furthermore, as shown in (d) of FIG. 6, the filled image may be placed in an area corresponding to the deleted specific building 601.

Therefore, as shown above in (d) of the drawing 6, a filled image including a cloud image 610 and a pattern 611 similar to an exterior appearance of an adjacent surrounding building may be placed on an area of the sensing image 600 corresponding to the deleted specific building 601. Furthermore, the sensing image 600 on which the filled image is placed may be rendered on the display 150 through the renderer 140. Accordingly, an image in which at least one object corresponding to a category according to satisfaction of a preset condition or a user's selection has naturally disappeared from among objects in the sensing image 600 may be output through the display 150.

Meanwhile, FIG. 7 shows in more detail an approximation operation process of step S306 of FIG. 3 of replacing, by the display device 10 according to an embodiment of the present disclosure, objects corresponding to a specific category with simplified objects. Furthermore, FIG. 8 is an exemplary diagram showing a process of generating an image in which a real object corresponding to a specific category is replaced with a simplified object according to the operation process of FIG. 7.

First, referring to FIG. 7, if an object corresponding to a specific category according to a user's selection or satisfaction of a preset condition is detected from among objects in the sensing image in the step S304 of FIG. 3, the processor 100 of the display device 10 may detect each object included in the sensing image. Furthermore, a simplified object corresponding to each of the detected objects may be generated (S700).

Here, the simplified object may be a polygon-shaped graphic model (hereinafter referred to as a polygon model) that may represent a shape of a target. That is, the simplified object may be a polygon-shaped virtual object on which texture is reflected.

The step S700 of generating the polygon model may be transmitting the location information of the vehicle 20 to a preset server to request POI information around the location of the vehicle 20, and receiving polygon models corresponding to respective objects in the sensing image from the preset server in response to the request.

Here, polygon models corresponding to respective objects in the sensing image may be included in the POI information on each area or building around the location of the vehicle 20. To this end, the preset server providing the POI information may be a server including a POI database including polygon models of buildings or surrounding areas around the vehicle 20 corresponding to the location information of the vehicle 20. In this case, the server may be a cloud server 30, and may be a server including a Digital Twin as a Service (DTaaS) server. Alternatively, the cloud server 30 may be a server that communicates with the DTaaS server.

Meanwhile, if a polygon model is generated in the step S700 or a polygon model is provided from the cloud server 30, the processor 100 may detect areas on the sensing image occupied by objects corresponding to a specific category according to a user's selection or satisfaction of a preset condition from among the objects in the sensing image in the step S304 of FIG. 3 (S702). Furthermore, pixel information of the detected areas, for example, color information, may be initialized (S704). Then, areas on the sensing image corresponding to objects detected in the step S304 may be deleted.

Furthermore, the processor 100 may display simplified objects generated or received in the step S700 in each area on the sensing image from which objects detected in step S304 of FIG. 3 have been deleted (S706). Then, in step S308 of FIG. 3, a sensing image in which some objects are replaced with simplified objects may be rendered on the display 150 through the renderer 140.

FIG. 8 is an exemplary diagram showing an example of an image in which a real object corresponding to a specific category is replaced with a simplified object according to the operation process of FIG. 7.

For example, the processor 100 of the display device 10 may detect only objects corresponding to a specific category according to a user's selection or satisfaction of a preset condition from among the objects included in the sensing image as objects to be approximated, or conversely, objects of other categories excluding a specific category according to a user's selection or satisfaction of a preset condition may be detected as objects to be approximated. FIG. 8 shows an example in which, from among objects in a sensing image 800, all objects of other categories except for objects corresponding to a specific category selected by a user or according to satisfaction of a preset condition are detected as objects to be approximated.

First, referring to (a) of FIG. 8, (a) of FIG. 8 shows an example in which categories according to a user's selection or satisfaction of a preset condition from among objects in the sensing image 800 are vehicles 810 and roads 811. In this case, all objects corresponding to categories other than vehicles 810 and roads 811, for example, buildings 820, may be selected as objects to be approximated.

Then, the processor 100 may generate a simplified object corresponding to each of the objects to be approximated. In this case, the simplified object may be a polygon model corresponding to a shape of each of the objects to be approximated. To this end, the processor 100 may detect a shape of an object to be approximated through an outline or the like of the object to be approximated from the sensing image 800 and generate a polygon model corresponding to the detected shape.

Alternatively, the processor 100 may transmit a POI information request including location information on a current location of the vehicle 20 to the cloud server 30. Then, the cloud server 30 may provide POI information items on POls around the location of the vehicle 20 in response to the POI information request. Here, the processor 100 may detect categories of objects detected as a target to be approximated from among respective objects included in the sensing image 800, and request POI information corresponding to the detected category from the cloud server 30. Then, the cloud server 30 may detect only the POI information items of the POI corresponding to the requested category from among the POI information items on the POIs around the vehicle 20 and transmit them as a response to the request.

Meanwhile, the POI information provided from the cloud server 30 may include information on a simplified object, for example, a polygon model on an object. Therefore, the processor 100 may acquire simplified objects corresponding to respective objects detected as a target to be approximated.

Then, the processor 100 may detect an area occupied by the objects detected as a target to be approximated from the sensing image 800. Furthermore, the detected area may be deleted. Furthermore, in each area on the sensing image 800 where objects have been deleted, simplified objects respectively corresponding to the deleted objects may be placed. Furthermore, the renderer 140 may be controlled so as to allow the sensing image 800 in which some objects are replaced with simplified objects to be rendered on the display 150.

Accordingly, as shown in (b) of FIG. 8, objects 810 corresponding to the category 'vehicle' and objects 811 corresponding to the category 'road' are displayed as they are in their sensed state, while the other objects, for example, building objects 820, can be replaced with simplified objects.

Meanwhile, according to the foregoing description, it has been mentioned that the display device 10 according to an embodiment of the present disclosure can detect objects corresponding to a category according to satisfaction of a preset condition as well as a user's selection from among respective objects of the sensed image. Furthermore, it has been mentioned that the preset condition can be an illumination, a time or a weather.

In such a case, the preset condition may be preset so as to allow a specific category to be selected when the preset condition is satisfied. That is, when a specific condition is satisfied, a specific category matching the specific condition may be selected as a category for detecting objects to be approximated.

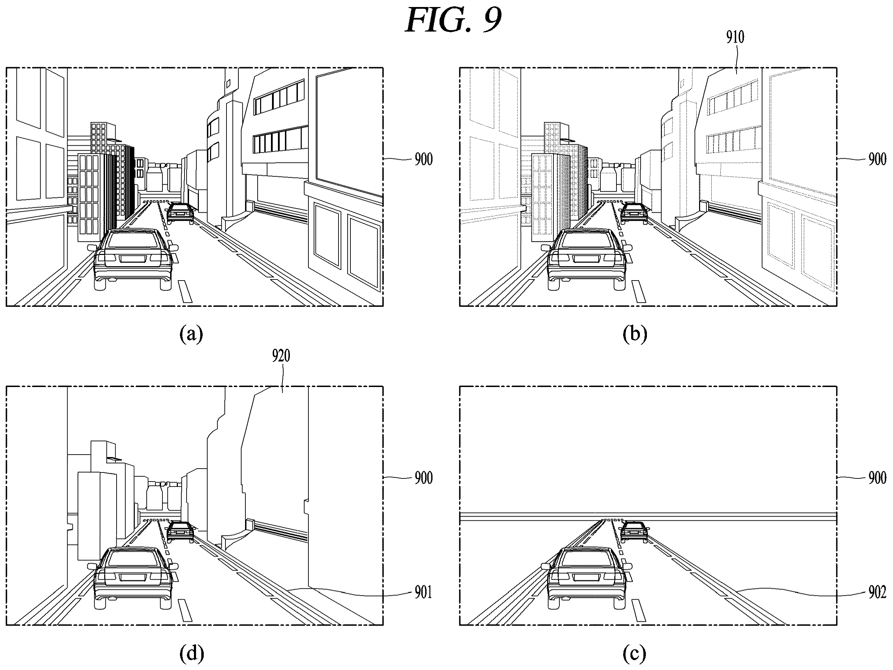

FIG. 9 is to describe the display device 10 according to an embodiment of the present disclosure in which a specific category is automatically selected based on satisfaction of a preset condition, assuming that the condition is a preset illuminance and the category matching the condition is 'building'.

First, referring to (a) of FIG. 9, the processor 100 may receive an image (sensing image 900) sensed by the camera 21 while the vehicle 20 is driving. Furthermore, based on the information items detected by the sensor unit 23 of the vehicle 20, it may be possible to determine whether a preset condition matching a specific category is satisfied.

In this case, the preset condition may be an illuminance. Then, the processor 100 may determine whether an illumination around the vehicle 20 has reached a preset illumination based on the illumination detected by an illumination sensor of the vehicle 20. Furthermore, when, as a result of the determination, the illumination around the vehicle 20 has reached a preset illumination, the processor 100 may determine that the preset condition matching the specific category has been satisfied.

Meanwhile, if the preset condition is satisfied, the processor 100 may select a specific category matching the condition as a category for approximating objects in the sensing image 900. In this case, if the category matching the preset illuminance condition is 'building', the processor 100 may detect objects 910 corresponding to the category 'building' matching the satisfied condition from the sensing image 900, as shown in (b) of FIG. 9.

Then, the processor 100 may proceed with approximation of the detected objects 910. For example, the processor 100 may delete the detected objects 910 from the sensing image 900. Accordingly, as shown in (c) of FIG. 9, an image in which objects 910 corresponding to buildings among the objects in the sensing image 900 are deleted may be output through the display 150.

Alternatively, the processor 100 may generate a simplified object corresponding to each of the detected objects 910 or receive it from the cloud server 30 through POI information, and replace objects 910 corresponding to buildings among the objects in the sensing image 900 with the generated or received simplified objects. Accordingly, as shown in (d) of FIG. 9, an image in which objects 910 corresponding to buildings among the objects in the sensing image 900 are replaced with simplified objects such as polygon models may be output through the display 150.

Meanwhile, according to the foregoing description, it has been mentioned that the display device 10 according to an embodiment of the present disclosure may also use an augmented reality object received through POI information as a simplified object.

FIGS. 10A and 10B are flowcharts showing in more detail steps S304 and S306 of FIG. 3 of displaying, by a display device according to an embodiment of the present disclosure, a real object corresponding to a specific category by replacing it with AR information corresponding to the specific category. Furthermore, FIG. 11 is an exemplary diagram showing an example in which a real object corresponding to a specific category is replaced with AR information according to the operation process of FIGS. 10A and 10B.

First, in the step S302 of FIG. 3, the processor 100 of the display device 10 may determine respective categories of objects included in an image sensed by the camera 21 based on a category specified in the classification information database 161. Furthermore, when step S304 of FIG. 3, which detects objects corresponding to a category selected by a user or according to fulfillment of preset conditions, is carried out, as shown in FIG. 10A, information on the category selected from the user or according to satisfaction of a preset condition (hereinafter, selected category) may be transmitted to the cloud server 30 together with location information of the vehicle 20 (S1000). That is, the processor 100 may request information of POIs (POI information) corresponding to the selected category from around a current location of the vehicle 20 from the cloud server 30.

Furthermore, in response to the request, when POI information items around the vehicle 20 corresponding to the selected category is received (S1002), the processor 100 may detect objects corresponding to a category selected by a user or according to satisfaction of a preset condition based on categories determined for respective objects included in the sensing image (S1004). Meanwhile, since the received POI information items are received from the cloud server 30 according to a category selected by the user or according to satisfaction of a preset condition, the object detection in the step S1004 may be a process of detecting objects corresponding to the categories of the received POI information items among the objects included in the sensing image.

Meanwhile, if at least one object from among the objects included in the sensing image is detected through the step S304 of FIG. 3 as shown above in FIG. 10A, the processor 100 may proceed to step S306 of FIG. 3 to perform approximation on the objects detected in the step S304. Hereinafter, FIG. 10B shows in more detail an approximation process carried out in the step S306 of the FIG. 3 in this case.

Referring to FIG. 10B, the processor 100 of the display device 10 according to an embodiment of the present disclosure may first extract an augmented reality object corresponding to a category selected by a user or according to satisfaction of a preset condition from POI information received from the cloud server 30 (S1050). Furthermore, through the operation process of the FIG. 10A, areas occupied by objects corresponding to a specific category according to a user's selection or satisfaction of a preset condition may be detected from among objects detected from the sensing image (S1052). Furthermore, pixel information of the detected areas, for example, color information, may be initialized (S1054). Then, the areas on the sensing image detected in the step S1052 may be deleted.

Furthermore, the processor 100 may display the augmented reality objects extracted in the step S1050 in each area of the sensing image deleted in the step S1054 (S1506). Then, in step S308 of FIG. 3, a sensing image in which some objects are replaced with augmented reality objects may be rendered on the display 150 through the renderer 140.

FIG. 11 is a drawing showing an example in which at least one object included in a sensing image is replaced with an augmented reality object through steps S304 and S306 of FIG. 3 according to the process described above in FIGS. 10A and 10B.

Referring to FIG. 11, (a) of FIG. 11 shows an example of a sensing image 1100 including buildings 1110, 1111, 1112 and vehicles and road objects. In this case, the processor 100 may identify and classify respective objects of the sensing image 1100 into objects 1110, 1111, 1112 corresponding to a building category, objects corresponding to a vehicle category, and objects corresponding to a road category based on the classification information database.

Meanwhile, the processor 100 may request information on POIs around the current vehicle 20, including information on categories based on a user's selection or satisfaction of a preset condition and information on a current location of the vehicle 20, from the cloud server 30. Then, the cloud server 30 may detect information on a POI corresponding to a category included in the received request from among the POIs around the location of the vehicle 20, and provide information including an augmented reality object corresponding to the detected POI, that is, POI information, as a response to the received request. Therefore, the processor 100 may acquire POI information including an augmented reality object for a POI around the current vehicle 20 corresponding to a category according to a user's selection or satisfaction of a preset condition.

In this state, among the buildings around the vehicle 20, a first building may correspond to a category according to a user's selection or satisfaction of a preset condition. Then, the processor 100 may detect an object 1110 corresponding to the first building from the sensing image 1100 shown above in (a) of FIG. 11. Furthermore, an area on the sensing image 1100 corresponding to the detected object 1110 of the first building may be initialized to delete the object 1110 corresponding to the first building from the sensing image 1100.

Then, the processor 100 may extract an augmented reality object 1120 corresponding to the first building from the POI information received from the cloud server 30. Furthermore, the extracted augmented reality object may be displayed in an area on the sensing image 1100 corresponding to the deleted object 1110. Therefore, as shown in (b) of FIG. 11, instead of the object 1110 corresponding to a specific category, an image 1101 including the augmented reality object 1120 may be output on the display 150.

Meanwhile, the processor 100 may detect color or pattern information of a surrounding area for an area on the sensing image 1100 corresponding to the deleted object 1110 and display a filled image generated according to the detected color or pattern information. Furthermore, the augmented reality object may be displayed to overlap in an area where the filled image is displayed. Therefore, an area where the object corresponding to the first building has been deleted may be more naturally displayed.

Meanwhile, in the foregoing description, only an external environment of a vehicle, such as an illuminance or weather, has been described as an example as a preset condition, but a user's physical condition may, of course, also be set as the preset condition. For example, when the user's physical condition is an emergency situation such as a seizure, the processor 100 may automatically select a category such as a hospital based on the detected user's physical condition. Alternatively, when the user experiences severe heat as a result of detecting the user's physical condition or the user is in a dehydrated state as a result of detecting a driver monitoring system (DMS), a category of places where he or she can get hydration, such as restaurants (coffee shops, etc.) where he or she can consume beverages, may be automatically set.

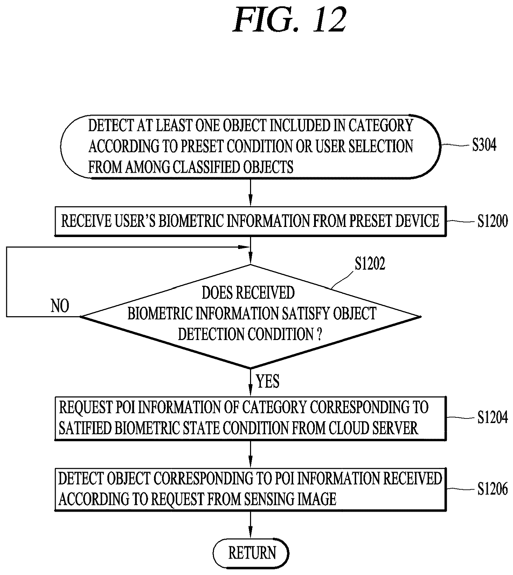

FIG. 12 is a flowchart showing an operation process of automatically selecting, by the display device 10 according to an embodiment of the present disclosure, a specific category based on the detected the user's physical condition, and detecting an object corresponding to the selected category.

In step S302 of FIG. 3, the processor 100 of the display device 10 may determine respective categories of objects included in an image sensed by the camera 21 based on a category specified in the classification information database 161. Furthermore, as shown in FIG. 12, the processor 100 of the display device 10 may receive a user's biometric information sensed from at least one device capable of sensing the user's biometric information (S1200).

Here, at least one of the devices may be a wearable device, such as a smartwatch worn by the user. Alternatively, it may be a sensor of the DMS of the vehicle 20. As an example, the sensor of the DMS may be an internal camera that acquires an image to detect a state of a driver or passenger in the cabin of the vehicle 20. Here, the 'user' may be any one of passengers on board the vehicle 20.

Furthermore, the processor 100 may determine whether the received user's biometric information satisfies a preset condition for detecting an object (S1202). That is, the processor 100 may determine the user's biometric state based on the received user's biometric information, and determine whether the determined user's biometric state satisfies a preset condition corresponding to a specific category. Here, the preset conditions may be different user's biometric states, and different biometric state conditions may be matched to different categories (e.g., dehydration or thirsty state - matched to a coffee shop or restaurant, seizure state - matched to a hospital).

As a result of the determination in the step S1202, when the received user's biometric state satisfies a preset biometric state condition, the processor 100 may determine a specific category that matches the satisfied biometric state condition. Furthermore, information on the determined specific category and current location information of the vehicle 20 may be transmitted to the cloud server 30 to request POI information around the vehicle 20 corresponding to the specific category (S1204). Furthermore, when POI information around the vehicle corresponding to the specific category is received from the cloud server 30, at least one object according to the received POI information from among respective objects in the sensing image identified in the step S302 of FIG. 3 may be detected as an object corresponding to a category matching the satisfied biometric state condition (S1206).

Meanwhile, as described in FIG. 12, if an object corresponding to POI information received from the cloud server 30 is detected from the sensing image, the processor 100 may replace the detected object with an augmented reality object extracted from the received POI information. Furthermore, an image in which some objects are replaced with augmented reality objects may be output on the display 150. That is, an image including an augmented reality object extracted from the POI information received through a process similar to that described above in FIG. 10B may be output on the display 150.

Meanwhile, the foregoing description has described an example in which at least one of the objects in the sensing image is deleted or replaced with a simplified object or an augmented reality object based on a specific category selected according to a user's selection or satisfaction of a preset condition.

However, on the contrary, the user may, of course, also select a specific POI instead of a specific category. In this case, the processor 100 of the display device 10 may delete at least part of the sensing image or replace it with an augmented reality object based on the selected POI.

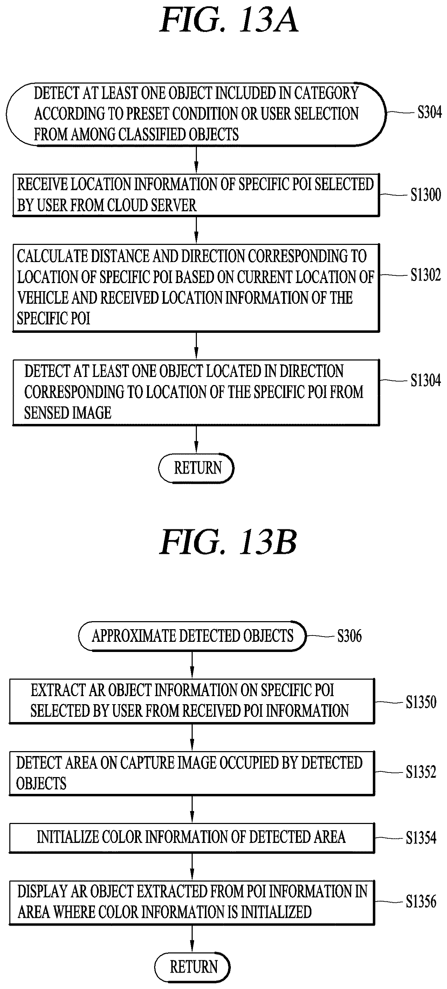

FIGS. 13A and 13B are flowcharts showing an operation process of detecting, by a display device according to an embodiment of the present disclosure, at least one object from a sensing image according to a vehicle and a location of a specific POI, and displaying an augmented reality object of the specific POI instead of the detected object as described above.

First, in the step S302 of FIG. 3, the processor 100 of the display device 10 may determine respective categories of objects included in an image sensed by the camera 21 based on a category specified in the classification information database 161. Furthermore, when the step S304 of FIG. 3 is carried out, the processor 100 may request POI information including a location of a specific POI selected by the user from the cloud server 30, as shown in FIG. 13A, and receive POI information including the location of the specific POI in response to the request (S1300).

Then, the processor 100 may calculate a direction and distance corresponding to the location of the specific POI from the sensing image based on the current location of the vehicle 20 and the location information of the specific POI (S1302). Furthermore, from the sensing image, at least one object located in a direction corresponding to the location of the specific POI may be detected.

As an example, when a direction from the vehicle 20 toward the specific POI is included within a field of view (FOV) of the sensing image, at least one object displayed in the sensing image may be located between the specific POI and the vehicle. Then, the processor 100 may detect at least one object in the sensing image that is located between the specific POI and the vehicle to obscure the specific POI as an object selected by the user. Then, the processor 100 may proceed to step S306 of FIG. 3 to perform approximation on objects detected through the step S304, that is, an operation process of FIG. 13A. Hereinafter, FIG. 13B shows in more detail an approximation process carried out in the step S306 of the FIG. 3 in this case.

Referring to FIG. 13B, the processor 100 of the display device 10 according to an embodiment of the present disclosure may first extract an augmented reality object corresponding to the specific POI from POI information received from the cloud server 30 (S1350). Furthermore, from the sensing image, areas corresponding to at least one object detected through the operation process of FIG. 13A, that is, at least one object in the sensing image located between the specific POI and the vehicle to obscure the specific POI, may be detected (S1352).

Furthermore, the processor 100 may initialize pixel information of an area in the sensing image corresponding to the detected areas to delete at least one object detected through the operation process of FIG. 13A from the sensing image (S1354). Furthermore, an augmented reality object corresponding to a specific POI extracted from the POI information may be displayed in an area in the sensing image from which the at least one object has been deleted (S1356). Then, in step S308 of FIG. 3, an image in which at least one object detected through the operation process of FIG. 13A is replaced with an augmented reality object corresponding to a specific POI selected by the user may be rendered on the display 150 through the renderer 140.

In this case, a size of the augmented reality object may be determined according to a distance between the current vehicle 20 and the location of the specific POI. That is, the closer a distance between the current vehicle 20 and the specific POI, the larger an augmented reality object may be displayed, and the closer the distance, the smaller the augmented reality object may be displayed.

Meanwhile, the processor 100 may detect color or pattern information of a surrounding area for an area on a sensing image corresponding to the at least one object that has been deleted, and display a filled image generated according to the detected color or pattern information. Furthermore, the augmented reality object may be displayed to overlap in an area where the filled image is displayed. Therefore, an augmented reality object corresponding to the specific POI may be displayed in an area where the at least one object is more naturally deleted.

Additionally, a number of objects to be deleted in the sensing image may increase or decrease depending on a size of the augmented reality object. As an example, as a distance between the vehicle 20 and the specific POI decreases, a size of the augmented reality object corresponding to the specific POI increases, and thus the number of objects in the sensing image that obscure the specific POI may increase. Therefore, a greater number of objects in the sensing image may be removed.

On the contrary, as a distance between the vehicle 20 and the specific POI increases, a size of the augmented reality object corresponding to the specific POI decreases, and thus the number of objects in the sensing image that obscure the specific POI may decrease. Therefore, fewer objects in the sensing image may be deleted.

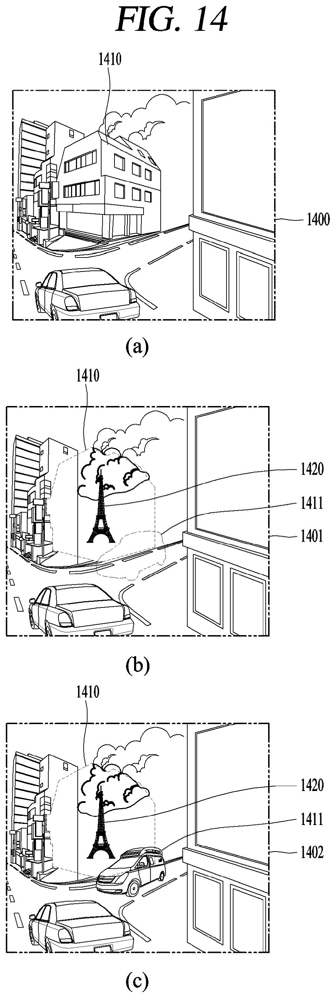

FIG. 14 is an exemplary diagram showing an example of an image being generated in which some of objects included in the sensed image are replaced with augmented reality objects of a specific POI according to the operation process of FIGS. 13A and 13B.

Referring to (a) of FIG. 14, the processor 100 may receive an image (sensing image 1400) sensed by the camera 21 while the vehicle 20 is driving. Furthermore, in this state, the processor 100 may detect, based on a location of a specific POI selected by a user and a current location of the vehicle, an object located in a direction toward the specific POI in the sensing image, that is, an object in the sensing image located between the specific POI and the vehicle to obscure the specific POI.

Meanwhile, when the specific POI is the Eiffel Tower (in this case, an augmented reality object corresponding to the Eiffel Tower may be received from the cloud server 30), and the objects in the sensing image obscuring the specific POI are objects corresponding to a first building (a first building object 1410) and a vehicle object 1411, the processor 100 may detect areas corresponding to the first building object 1410 and the vehicle object 1411 in the sensing image, as shown in (b) of FIG. 14.

Furthermore, pixel information of the detected areas may be initialized to delete the first building object 1410 and the vehicle object 1411 from the sensing image. Furthermore, as shown in (b) of FIG. 14, an augmented reality object 1420 corresponding to a currently selected specific POI, that is, the Eiffel Tower, may be displayed in an area in the sensing image 1400 corresponding to the deleted first building object 1410 and vehicle object 1411. In this case, a size of the augmented reality object 1420 may be determined according to a distance between the vehicle 20 and the Eiffel Tower.

Meanwhile, unlike what is shown above in (b) of FIG. 14, the user may, of course, also set specific categories for which deletion is restricted in advance. In such cases, even if an object obscures a specific POI in a sensing image, an object in a category for which deletion is restricted by the user may not be deleted. When an object is indiscriminately deleted from the sensing image according to a POI selected by the user, it is to prevent a risk of an accident or the like as it is not displayed on the display 150 even though it is an actual object (e.g., a nearby vehicle object, etc.).

As an example, when the user is preset to restrict deletion for objects corresponding to the vehicle category, the processor 100 may not delete the vehicle object 1411 even though both the first building object 1410 and the vehicle object 1411 obscure the specific POI. In this case, as shown in (c) of FIG. 14, only the first building object 1410 may be deleted, and the augmented reality object 1420 corresponding to the specific POI may be displayed in an area in the sensing image corresponding to the deleted first building object 1410.

Meanwhile, unlike the foregoing description, it may, of course, also be possible to pre-designate specific categories that can be deleted from among objects that obscure a specific POI within the sensing image. In this case, from among the objects that obscure a specific POI within the sensing image, only objects corresponding to a specific category for which deletion is permitted may be deleted. Furthermore, an augmented reality object corresponding to the specific POI may be displayed in the deleted area.

Meanwhile, the processor 100 of the display device 10 according to an embodiment of the present disclosure may, of course, also track and display a change in relative location between a specific object and the vehicle 20 that changes according to the movement of the vehicle 20 through an augmented reality object displayed on the sensing image.

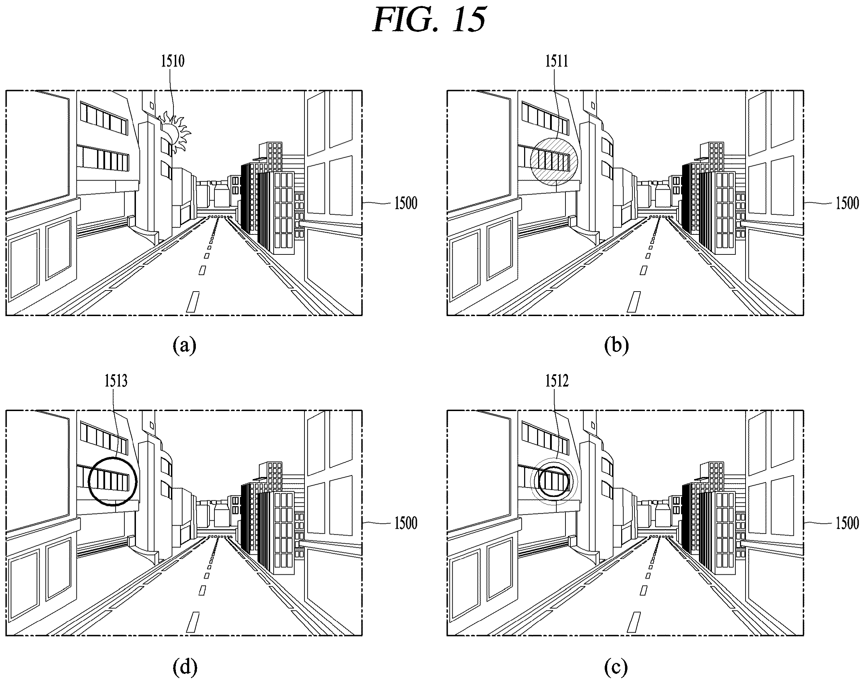

FIG. 15 is an exemplary diagram showing an example in which a location of a specific object moving on a sensing image is displayed using an augmented reality object corresponding to the specific object selected by a user in the display device 10 according to an embodiment of the present disclosure as described above.

First, referring to (a) of FIG. 15, the processor 100 of the display device 10 may select at least one object from among objects displayed in a sensing image. In this case, the selected object may be an object directly selected by the user from among the displayed objects, or an object detected according to a category or POI selected by the user. In the following description, for convenience of explanation, it is assumed that an object 1510 corresponding to the sun in the sensing image is selected by the user.

In this case, the processor 100 may detect whether the selected object in the sensing image is obscured by another object in the sensing image depending on a movement of a vehicle or a passage of time. Furthermore, when at least part of the selected object is obscured by the other object, the obscured at least part may be displayed as an augmented reality object corresponding to the selected object. Furthermore, the selected object that moves according to the movement of the vehicle or the passage of time may be displayed as the movement of the augmented reality object.

That is, as shown in (a) of FIG. 15, when the selected object 1510 moves according to the movement of the vehicle 20 or the passage of time to be at least partially obscured by a building object in the sensing image, the processor 100 may display various augmented reality objects corresponding to the selected object 1510, as shown in (b) to (d) of FIG. 15. That is, an augmented reality object 1511 having a hatched circular shape ((b) of FIG. 15), an augmented reality object 1512 having a three-dimensional shape with a concave or convex center ((c) of FIG. 15), or an augmented reality object 1513 having a cylindrical shape ((d) of FIG. 15) may be displayed to overlap another object in the sensing image, thereby indicating the movement of the selected object.

In this case, the augmented reality object may be displayed on a top of other objects in the sensing image. Accordingly, a state in which the selected object moves in the sensing image may be tracked and displayed.

Meanwhile, the foregoing description has been described on the assumption that a specific object among the objects in the sensing image is selected by the user, but an object corresponding to a specific POI or a specific category selected by the user may, of course, also be tracked and displayed in the same manner. In this case, even if a specific object corresponding to the specific POI or specific category is obscured by another object in the sensing image, an augmented reality object corresponding to the specific object may be displayed to overlap the other object obscuring the specific object at a location corresponding to the specific object, thereby allowing a state in which the specific object is moving in the sensing image to be displayed on the display 150.

The foregoing present disclosure can be implemented as computer-readable codes on a program-recorded medium. The computer-readable medium includes all kinds of recording devices in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and also include a device implemented in the form of a carrier wave (e.g., transmission over the Internet). In addition, the computer may also include the processor 100 of the display device 10. The detailed description is therefore to be construed in all aspects as illustrative and not restrictive. The scope of the present disclosure should be determined by reasonable interpretation of the appended claims and all changes that come within the equivalent scope of the present disclosure are included in the scope of the present disclosure.

## Claims

1. A display device comprising:
an interface unit that receives, from at least one sensor provided in a vehicle, a sensing image sensing an environment surrounding the vehicle;
a memory comprising a classification information database comprising classification information items for classifying respective objects included in the sensing image into different preset categories;
an object identification unit that classifies and identifies respective objects included in the sensing image into one of the categories on the classification information database based on the classification information;
a renderer that renders an image to be displayed on a display provided in the vehicle; and
a processor that detects objects corresponding to at least one category selected by a user from among objects identified by the category, controls the renderer to render an output image in which the detected objects are replaced with graphic objects corresponding to the detected objects, and controls the interface unit so as to allow the rendered output image to be output on the display through the interface.

2. The display device of claim 1, further comprising:
a communication unit communicating with a cloud server that provides POI information comprising an augmented reality object corresponding to a position of interest (POI) around the vehicle,
wherein the processor requests POI information on a POI around the vehicle, including information on a current location of the vehicle and at least one category selected by the user from the cloud server, extracts, when at least one POI information corresponding to the at least one category among POIs around the vehicle is received from the cloud server in response to the request, an augmented reality object from the received POI information, and controls the renderer to render an output image in which the detected objects are replaced with the extracted augmented reality objects.

3. The display device of claim 2, wherein the cloud server comprises:
POI information items classified according to the plurality of preset categories, and
wherein the classification information database comprises:
classification information items for classifying respective objects included in the sensing image according to the plurality of preset categories into which the POI information items are classified by the cloud server.

4. The display device of claim 1, wherein the graphic object, which is a polygon object, is a graphic object representing a shape of each of the detected objects.

5. The display device of claim 1, wherein the processor deletes objects detected according to the selected at least one category from the sensing image, and controls the renderer to render an output image in which the detected objects are deleted from the sensing image.

6. The display device of claim 5, wherein the processor detects an area where the detected objects are displayed from the sensing image and initializes color information of the detected area to delete the detected objects from the sensing image, and
wherein the color of the initialized area varies according to a user's selection.

7. The display device of claim 5, wherein the processor detects, when the detected objects are deleted from the sensing image, at least one of a color of a surrounding area of the deleted objects and a color pattern of the surrounding area, generates a filled image corresponding to an area in the sensing image from which the detected objects have been deleted based on at least one of the color and the color pattern, and controls the renderer to render an output image in which the filled image is displayed within an area of the sensing image corresponding to the deleted objects.

8. The display device of claim 1 or 5, wherein the processor further detects, when a preset condition is satisfied, objects corresponding to a specific category matching the satisfied condition from the sensing image.

9. The display device of claim 1 or 5, wherein the preset condition is a condition for at least one of an illuminance, a weather, or a time of the vehicle.

10. The display device of claim 1 or 5, wherein the preset condition is a condition for biometric information detected from at least one of passengers of the vehicle detected by a sensor unit of the vehicle.

11. The display device of claim 2, wherein the processor detects, based on location information of a preset specific POI and location information of a vehicle, at least one object in the sensing image located in a direction from the vehicle toward the specific POI, deletes the detected at least one object from the sensing image, and controls the renderer to render an output image that displays a graphic object corresponding to the specific POI in an area in the sensing image corresponding to the deleted at least one object.

12. The display device of claim 11, wherein the graphic object is an augmented reality object corresponding to the specific POI, and
wherein the processor receives location information of the specific POI and an augmented reality object corresponding to the specific POI from the cloud server.

13. The display device of claim 11, wherein the processor calculates a distance between the specific POI and the vehicle based on the location information of the specific POI and the location information of the vehicle, and determines a size of the graphic object according to the calculated distance.

14. The display device of claim 11, wherein the processor detects, from among objects in the sensing image located in a direction toward the specific POI, objects corresponding to a category for which deletion is restricted, and deletes only the remaining objects excluding the objects corresponding to the category for which deletion is restricted.

15. A method of controlling a camera and at least one sensor provided in a vehicle and a display device connected to a display through an interface unit, the method comprising:
receiving a sensing image sensed through the camera;
classifying and identifying categories corresponding to respective objects included in the sensing image based on classification information items for classifying into different preset categories;
detecting objects corresponding to at least one specific category selected by a user from among the objects identified by the category;
generating an output image by replacing the detected objects with graphic objects respectively corresponding to the detected objects; and
rendering the output image so as to allow the generated output image to be output on the display.

16. The method of claim 15, wherein the generating of the output image comprises:
initializing an area in the sensing image corresponding to each of the detected objects to generate an output image from which the detected objects are deleted from the sensing image.

17. The method of claim 16, wherein the generating of the output image comprises:
initializing an area in the sensing image corresponding to each of the detected objects;
detecting at least one of a color of a surrounding area of the deleted objects and a color pattern of the surrounding area;
generating a filled image corresponding to an area in the sensing image from which the detected objects are deleted based on at least one of the color and color pattern; and
generating an output image in which the filled image is displayed in an area of the sensing image corresponding to the deleted objects.

18. The method of claim 15, wherein the generating of the output image comprises:
transmitting information of the specific category and location information of the vehicle to a cloud server, and requesting POI information including an augmented reality object corresponding to a position of interest (POI) of a category corresponding to the specific category around the location of the vehicle;
receiving POI information from the cloud server in response to the request;
deleting, from among the objects included in the sensing image, an object corresponding to the specific category from the sensing image; and
generating an output image in which an augmented reality object corresponding to each object deleted from the sensing image is displayed in an area on the sensing image corresponding to the deleted object.

19. The method of claim 15, wherein the detecting of objects corresponding to the specific category comprises:
detecting a location of a specific POI selected by a user based on a location of the vehicle; and
detecting, from the sensing image, at least one object displayed in a direction from the location of the vehicle toward the location of the specific POI, and
wherein a graphic object corresponding to the detected object is an augmented reality object corresponding to the specific POI.
